# EUROPÄISCHE PATENTSCHRIFT

(11) **EP 1 835 580 B1**
(45) Veröffentlichungstag und Bekanntmachung des Hinweises auf die Patenterteilung: **12.09.2012**
(21) Anmeldenummer: 06005053.1
(22) Anmeldetag: 13.03.2006
(51) Int. Cl.: H02B 1/28, H02B 1/50

(54) **Kabelverteilerschrank mit Berstsicherung**
Cable distribution cabinet with bursting preventing means
Armoire de distribution de câbles ayant des moyens pour empêcher sa rupture

(43) Veröffentlichungstag der Anmeldung: 19.09.2007
(73) Patentinhaber: Jean Müller GmbH Elektrotechnische Fabrik, 65343 Eltville (DE)
(72) Erfinder: SCHÜPPENHAUER, Arnd Ing., D-65205 Wiesbaden (DE); SCHLEIS, Otmar, D-56346 St. Goarschausen (DE)
(74) Vertreter: Quermann, Helmut

(56) Entgegenhaltungen:
- DE-U1- 9 101 147
- FR-A- 1 405 441

## Beschreibung

Die Erfindung betrifft einen Kabelverteilerschrank mit mindestens einer verriegelbaren Tür, die schwenkbar im Gehäuse des Schrankes gelagert ist, sowie der Schrank im Bereich der Verbindung von Gehäuse und Tür mit einer Berstsicherung versehen ist.

Kabelverteilerschränke zur Verwendung bei der Energieversorgung, insbesondere Kabelverteilerschränke für Niederspannungen, sind aus dem Stand der Technik hinlänglich bekannt. Die Verteilerschränke werden in aller Regel im Freien aufgestellt und sind vorzugsweise geeignet zum Einbau von Verteilerkomponenten für die öffentliche Energieversorgung sowie Gerätekomponenten, wie Verkehrsanlagen, Pumpensteuerungen usw..

Bei Aufstellung von Verteilerschränken im Freien wird dieser bis zu einer bestimmten Tiefe in die Erde eingegraben. Zu- und Abgangskabel werden, von unten aus der Erde kommend, in das Schrankinnere eingelegt. Für die Zugentlastung der Kabel kann sich im Sockelbereich eine Kabelbefestigungsschiene befinden. Im Schrankoberteil können entsprechende Verteilerkomponenten oder Steuereinheiten an definierten Punkten befestigt werden.

Bekannte Kabelverteilerschränke bestehen beispielsweise aus Kunststoff. Schrankober-/unterteil bilden eine Einheit und sind verschraubt oder durch einen verschraubungsfreien Verriegelungsschieber mit integrierter Sollbruchstelle verbunden. Der Schrank besteht aus Einzelteilen, die insbesondere im Baukastensystem zusammengefügt sind. Der Türverschluss erfolgt beispielsweise durch eine Dreipunktverriegelung, geeignet für den Einbau handelsüblicher Halbprofilzylinder.

Die Kurzschlussleistung in elektrischen Netzen und Anlagen hat im Laufe der letzten Jahre stark zugenommen. Damit steigt auch die Leistung, die bei Störungen z. B. durch Lichtbögen in Wärme umgesetzt wird. Diese freiwerdende Wärmeenergie als Folge von Kurzschlusslichtbögen kann Kabelverteilerschränke durch Druckerhöhung aufbrechen; die thermische Ausdehnung der eingeschlossenen Luft führt zu einem Überdruck, der von den vorhandenen Entlüftungen nicht schnell genug abgeführt werden kann. Weiterhin kann durch thermische Zersetzung von Isolierstoffen, durch Volumenvergrößerung oder durch Bildung explosiver Gemische eine zusätzliche Druckerhöhung erfolgen.

Ein Kabelverteilerschrank mit den Merkmalen der eingangs genannten Art ist aus der DE 91 01 147 U1 bekannt. Dort stellt die Lagerung der Tür im Gehäuse und die Berstsicherung eine funktionelle Einheit dar. Die Lagerung der Tür in Holmenprofilen des Schrankes erfolgt unmittelbar über die Berstsicherung. Diese ist als Federelement, insbesondere Federstahlblech ausgebildet. Durch diese Ausbildung der Berstsicherung ist ein effizienter Druckausgleich bei Überdruck im Schrank gewährleistet, indem ein rasches und allseitiges Abheben der Tür von den Seitenblechen des Schaltschranks möglich ist.

Ein Kabelverteilerschrank mit den eingangs genannten Merkmalen ist ferner aus der FR 1 405 441 A bekannt. Beim Verriegeln einer Tür des Schrankes mittels einer Verriegelung wird eine starre Verriegelungsstange zwischen der Rückwand des Schrankes und der Tür mit verriegelt, so dass bei einer Explosion im Inneren des Schrankes die Tür gegen Bersten gesichert ist.

Aufgabe der vorliegenden Erfindung ist es, einen Kabelverteilerschrank der Eingangs genannten Art so weiterzubilden, dass dieser bei einer Kurzschluss-Lichtbogenstörung berstsicher ist. Bei einer Verformung der Tür zwischen deren Schwenklagern bei einer Kurzschluss-Lichtbogenstörung oder gar beim Brechen einer Lagerstelle der Tür bei Vorliegen einer solchen Störung soll gewährleistet sein, dass nach Abbauen des Überdrucks im Schrank maximal ein solcher Spalt zwischen Tür und Wand verbleibt, der eine definierte Schutzart betreffend Berührschutz sicherstellt.

Gelöst wird die Aufgabe durch einen Kabelverteilerschrank der eingangs genannten Art, wobei der Schrank im Bereich der Verbindung von Tür und einer Wand des Gehäuses mit der Berstsicherung versehen ist, die als Band oder Seil ausgebildet ist, das die Wand mit der Tür verbindet, wobei die Berstsicherung benachbart der Schwenkachse der Tür an dieser und der Wand angreift und zwischen den Lagerstellen der Tür angeordnet ist.

Ohne Berstsicherung ergibt sich das Problem, dass bei einer plötzlichen Druckerhöhung im Inneren des Schranks, sich die Tür zwischen deren Schwenklagern verformt und nach dem Abbauen des Überdrucks im Schrank ein Spalt zwischen Tür und Wand verbleibt, der größer ist als 50 mm, somit die Anforderungen der Schutzart IP 1X nach EN 60529 nicht mehr erfüllt. Durch die Erfindung soll diese Schutzart selbst dann erfüllt werden, wenn auf Grund des Überdrucks in dem Schrank und damit der Verformung des Schranks eine Lagerstelle der Tür brechen oder außer Kontakt mit dem Gehäuse gelangen sollte. In diesem Fall gewährleistet die Berstsicherung, dass der dann zwischen Wand und Tür eingenommene V-förmige Spalt nur eine solche Breite hat, dass auch in diesem Fall die Schutzart IP 1X eingehalten wird.

Es wird als besonders vorteilhaft angesehen, wenn die Berstsicherung als Band ausgebildet ist. Dieses lässt sich auf Grund seiner Breite sehr einfach montieren und gestattet unterschiedliche Anordnungen im Schrank. Besonders zweckmäßig ist es, wenn das Band in Art einer Schlaufe angeordnet ist, wobei die aufeinander liegenden freien Enden des Bandes mit der Wand oder der Tür verbunden sind, insbesondere mittels einer Schraubverbindung verbunden sind, und das Schlaufenende mittels einer Steckverbindung, insbesondere einer ohne Hilfswerkzeug herstellbaren und lösbaren Steckverbindung, in der Tür bzw. der Wand gelagert ist. Die Ausbildung des Bandes in Art einer Schlaufe ermöglicht eine relativ große Kraftaufnahme des Bandes und gestattet überdies eine einfache Montage sowie ein unkompliziertes Auswechseln der Tür. Hierfür ist es nur erforderlich, die Steckverbindung des Schlaufenendes im Bereich der Tür zu lösen, die Tür zu wechseln und das Schlaufenende wieder mittels der Steckverbindung mit der Tür zu verbinden. Selbstverständlich gelten vorstehende Ausführungen analog, wenn die aufeinander liegenden freien Enden des Bandes nicht mit der Wand, sondern mit der Tür verbunden sind.

Gemäß einer besonderen Ausführungsform der Erfindung ist vorgesehen, dass die Berstsicherung, insbesondere das Band, elastisch ausgebildet ist. Vorteilhaft besteht die Berstsicherung aus Kunststoff, Gummi oder Gummi mit Einlage. Sie weist insbesondere eine solche Länge auf, dass nach dem Berstvorgang und Abbauen des Überdrucks im Schrank die Tür und Wand im Bereich der Berstsicherung weniger als 50 mm, vorzugsweise weniger als 35 mm voneinander wegbewegt sind.

Der Vorteil der elastischen Ausbildung der Berstsicherung ist insbesondere darin zu sehen, dass beim Beaufschlagen des Kabelverteilerschranks mit Überdruck im Berstfall Energie von der Berstsicherung aufgenommen wird, sodass die wand- und türseitigen Lagerungen der Berstsicherung geringer beansprucht werden. Ferner kann sich die Berstsicherung in Folge deren elastischen Nachgiebigkeit stärker dehnen, sodass der hohe Druck im Inneren des Schranks durch einen größeren Spalt zwischen Tür und Wand abgebaut werden kann. Hierbei kann durchaus hingenommen werden, dass dieser Spalt eine maximale Öffnung von > 50 mm besitzt. Auf Grund der Elastizität der Berstsicherung wird der Spalt, sobald der Druck im Inneren des Kabelverteilerschranks abnimmt, abgebaut und es sind dann, bei vollständigem Abbau des Überdrucks im Schrank, die Tür und die Wand maximal 50 mm voneinander wegbewegt. Durch entsprechende Dimensionierung der elastischen Berstsicherung kann durchaus erreicht werden, diesen Spalt wesentlich geringer zu gestalten. Der maximale Spalt kann beispielsweise durch ein kürzeres elastisches Band bzw. Seil maximal 12 mm betragen, welches Fingersicherheit entspricht, sodass die strengere Schutzklasse IP 2X nach EN 60529 eingehalten wird. Diese Schutzklasse stellt auf einen Prüfinger von 12 mm Durchmesser ab, im Unterschied zur Schutzart IP 1X mit einem Prüfkugeldurchmesser von 50 mm, welches Handrückensicherheit entspricht.

Der Schrank ist insbesondere so gestaltet, dass die Tür in einander abgewandten Endbereichen, entlang einer Begrenzungskante der Tür, im Gehäuse gelagert ist, sei es im Dach, einem unteren Segment oder der Wand des Gehäuses.

Die Berstsicherung ist vorzugsweise im Bereich des mittleren Drittels zwischen den Lagerstellen der Tür, insbesondere auf halber Länge zwischen den Lagerstellen.

Gemäß einer vorteilhaften Weiterbildung der Erfindung ist vorgesehen, dass die Tür, benachbart der Berstsicherung, mit mindestens einem Formteil versehen ist, das parallel zur Ebene der Tür wirksam ist und in der geschlossenen Stellung der Tür ein Formteil der Wand hintergreift. Dieser Anordnung kommt die Aufgabe zu, Wandalismus vorzubeugen, indem ein Aufhebeln des Schrankes in diesem Bereich wesentlich erschwert ist. Bei Verwendung einer elastischen Berstsicherung kann diese beim Abbau des hohen Drucks im Innenraum des Schrankes, und damit dem Zurückwölben von Wand und Tür, die Wand und die Tür soweit wieder aufeinander zu bewegen, dass die Formteile wieder in deren Hintergriffsstellung überführt werden und sich somit die Tür normal öffnen und schließen lässt.

Weitere Merkmale der Erfindung sind in den Unteransprüchen, der Beschreibung der Figuren und in den Figuren selbst dargestellt, wobei bemerkt wird, dass alle Einzelmerkmale und Kombinationen von Einzelmerkmalen erfindungswesentlich sind.

In den Figuren ist die Erfindung anhand zweier Ausführungsformen dargestellt, ohne auf diese beschränkt zu sein. Es zeigt:
- Figur 1: eine erste Ausführungsform des erfindungsgemäßen Kabelverteilerschranks, in einer räumlichen Ansicht gesehen, bei geöffneter Tür,
- Figur 2: das in Figur 1 mit Kreis veranschaulichte Detail des Kabelverteilerschranks mit der erfindungsgemäßen Berstsicherung,
- Figur 3: eine räumliche Ansicht einer zweiten Ausführungsform einer beim Kabelverteilschrank Verwendung findenden Berstsicherung.

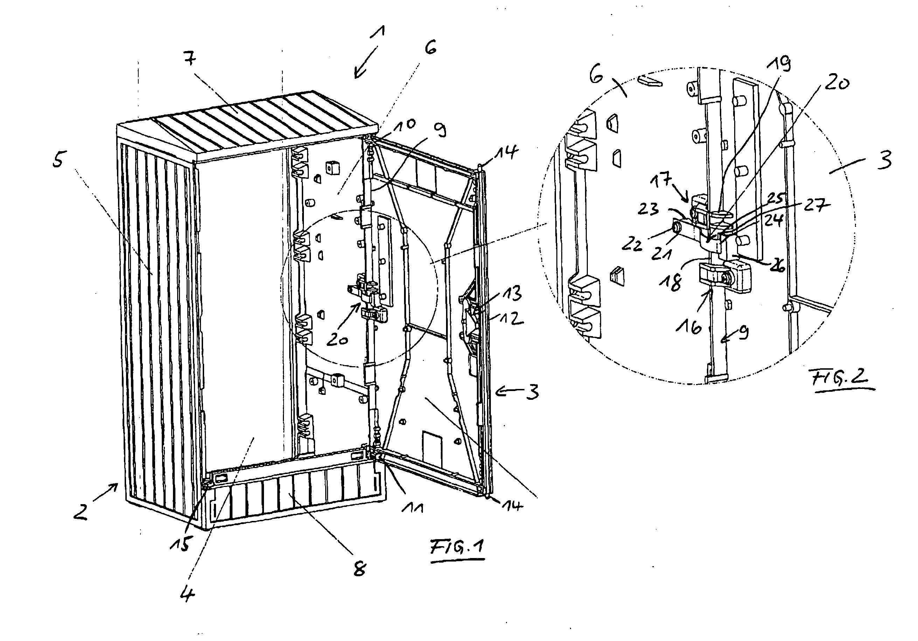

Der in der Figur 1 veranschaulichte Kabelverteilerschrank ist ohne Sockel, der in die Erde eingegraben wird, veranschaulicht. Nicht gezeigt sind ferner im Schrank einzubauende Verteilerkomponenten sowie Gerätekomponenten. Der Schrank 1 weist ein Gehäuse 2 und eine in diesem schwenkbar gelagerte Tür 3 auf. Das Gehäuse 2 weist eine Rückwand 4, eine linke Seitenwand 5, eine rechte Seitenwand 6, ein Dach 7 und ein vorderes Segment 8, das unterhalb der Tür 3 angeordnet ist, auf. Der Schrank besteht aus Kunststoff und er stellt sich, bezogen auf die geschlossene Stellung der Tür 3, im Wesentlichen als quaderförmiger Gegenstand dar.

Die Tür 3 ist rechteckig ausgebildet. Im Bereich einer Längsseite 9 ist sie im Bereich ihres oberen Endes 10 und ihres unteren Endes 11 in bekannter Art und Weise über nicht dargestellte Zapfen in Ausnehmungen des Daches 7 und des Segmentes 8 gelagert. Da der Schrank 1 insgesamt als Stecksystem ausgebildet ist, kann die Tür 3 einfach montiert werden, indem sie mit ihren unteren Zapfen in die Ausnehmung des Segmentes 8 eingesteckt wird, anschließend mit deren Längsseite 9 in die vertikale Position gekippt wird, in der der obere Zapfen der Tür 3 mit der Ausnehmung im Dach 7 fluchtet und dann das Dach und die beiden Seitenwände 5 und 6 zusammengesteckt werden. Die Tür 3 ist im Bereich der anderen Längsseite 12 mit einem Schließmechanismus 13 versehen, der über ein nicht veranschaulichtes Gestänge mit oberen und unteren Zapfen 14 zusammenwirkt. Bei geschlossener Tür 3 greifen diese Zapfen 14 in Ausnehmungen im Dach 7 und im Segment 8 ein, wobei in der Figur 1 nur die Ausnehmung 15 im Segment 8 sichtbar ist.

Bei geschlossener Tür 3 ist diese somit im Bereich ihrer vier Ecken im Dach 7 und im Segment 8 gehalten.

Die rechte Wand 6 und die Tür 3 sind ferner mit einer Sicherung gegen Aufhebeln der Tür 3 im mittleren Abschnitt zwischen deren Lagerstellen im Dach 7 und dem Segment 8 versehen. Dieses Detail und die nachfolgend noch näher zu beschreibende Berstsicherung sind in der Figur 2 in vergrößertem Maßstab gezeigt:

So ist in Abstand, bezogen auf die Längserstreckung der Tür 3, ein hakenförmiges Formteil 16 mit der Tür 3 und ein hakenförmiges Formteil 17 mit der rechten Seitenwand 6 verbunden. Das Formteil 16 ist parallel zur Ebene der Tür 3, das Formteil 17 parallel zur Ebene der rechten Seitenwand 6 wirksam. In der geschlossenen Stellung der Tür 3 hintergreift das mit der Tür 3 verbundene Formteil 16 ein Formteil der rechten Seitenwand 6, das als Steg 18 ausgebildet ist. Entsprechend hintergreift bei geschlossener Tür 3 das mit der rechten Seitenwand 6 verbundene Formteil 17 ein mit der Tür 3 verbundenes Formteil 19. In geschlossenem Zustand der Tür 3 ist auf Grund des paarweisen Zusammenwirkens der Formteile ein Aufhebeln des Schrankes im Bereich zwischen der Tür 3 und der rechten Seitenwand 6 wesentlich erschwert.

Zwischen den Formteilen 16 und 17 ist die Berstsicherung 20 angeordnet. Diese ist als elastisches Band ausgebildet, konkret als elastischer Schlauch ausgebildet. Das Band bzw. der Schlauch ist in Art einer Schlaufe angeordnet, wobei die aufeinander liegenden freien Enden des Bandes 20 mit der rechten Seitenwand 6 verbunden sind, indem eine Schraube 22 das doppellagige Band durchsetzt und in einen an die Seitenwand 6 angespritzten Nocken 23 eingeschraubt ist. Das Schlaufenende 24, somit der Bereich des Bandes, der der Schraube 22 abgewandt ist, ist mittels einer Steckverbindung in der Tür 3 gelagert. Diese Steckverbindung lässt sich ohne Hilfswerkzeug herstellen und lösen. Im Ausführungsbeispiel nach den Figuren 1 und 2 wird das Schlaufenende 24 von einem in der Darstellung dieser Figuren nicht gezeigten Stab durchsetzt, wobei ein mit einem Schlitz 25 und einer oben offenen Aufnahme 27 versehenes Lagerteil mit der Tür 3 verbunden ist. Das doppellagige Band 20 durchsetzt den Schlitz 25 und es ist der Stab in die Aufnahme 27 eingesetzt.

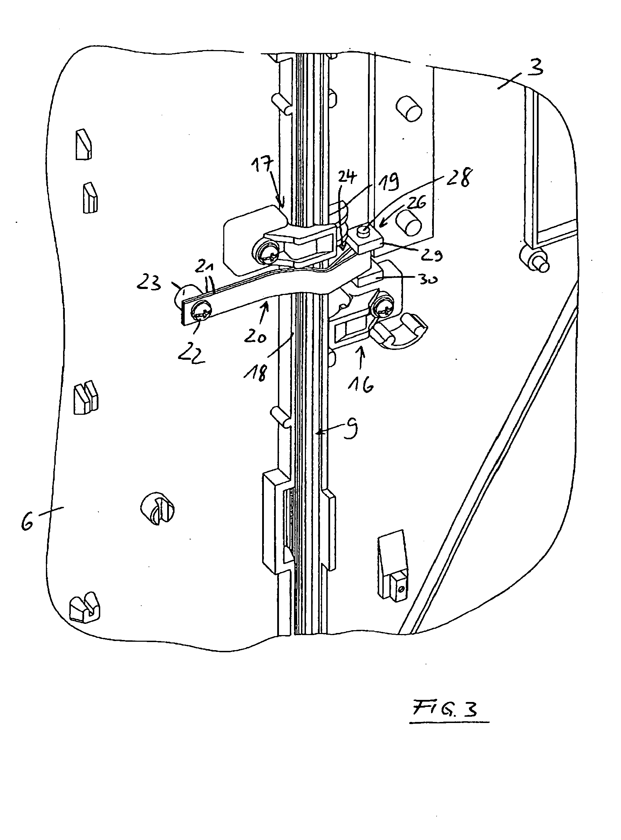

Bei der modifizierten Ausführungsform nach der Figur 3 ist zu erkennen, dass das Schlaufenende 24 den Stab 28, wie er auch bei der anderen Ausführungsform vorgesehen ist, durchsetzt, wobei bei der Ausführungsform nach der Figur 3 allerdings das mit der Tür 3 verbundene Lagerteil 26 U-förmig ausgebildet ist, mit horizontal angeordneten Schenkeln 29 und 30, wobei der Stab 28 ein durchgehendes Loch im Schenkel 29 durchsetzt und in ein nicht gezeigtes Sackloch im Schenkel 30 eingeführt ist.

Die Länge der Berstsicherung 20 bzw. des Bandes ist so bemessen, dass nach dem Berstvorgang und Abbau des Überdrucks im Schrank 1 die Tür 3 und die rechte Seitenwand 6 im Bereich der Berstsicherung 20 weniger als 50 mm, vorzugsweise weniger als 35 mm voneinander wegbewegt sind.

## Patentansprüche

1. Kabelverteilerschrank (1) mit mindestens einer verriegelbaren Tür (3), die schwenkbar im Gehäuse (2) des Schrankes (1) gelagert ist, sowie der Schrank (1) im Bereich der Verbindung von Gehäuse (2) und Tür (1) mit einer Berstsicherung (20) versehen ist, **dadurch gekennzeichnet, dass** der Schrank (1) im Bereich der Verbindung von Tür (3) und einer Wand (5) des Gehäuses (2) mit der Berstsicherung (20) versehen ist, die als Band oder Seil ausgebildet ist, das die Wand (6) mit der Tür (3) verbindet, wobei die Berstsicherung (20) benachbart der Schwenkachse (9) der Tür (3) an dieser und der Wand (6) angreift und zwischen den Lagerstellen der Tür (3) angeordnet ist.

2. Schrank nach Anspruch 1, **dadurch gekennzeichnet, dass** die Berstsicherung (20) elastisch ausgebildet ist.

3. Schrank nach Anspruch 1 oder 2, **dadurch gekennzeichnet, dass** die Berstsicherung (20) aus Kunststoff, Gummi oder Gummi mit Einlage besteht.

4. Schrank nach einem der Ansprüche 1 bis 3, **dadurch gekennzeichnet, dass** die Länge der Berstsicherung (20) so bemessen ist, dass nach dem Berstvorgang und Abbau des Überdrucks im Schrank die Tür (3) und Wand (6) im Bereich der Berstsicherung (20) weniger als 50 mm, vorzugsweise weniger als 35 mm voneinander wegbewegt sind.

5. Schrank nach einem der Ansprüche 1 bis 4, **dadurch gekennzeichnet, dass** das Band (20) als Schlauch ausgebildet ist.

6. Schrank nach einem der Ansprüche 1 bis 5, **dadurch kennzeichnet, dass** das Band (20) in Art einer Schlaufe angeordnet ist, wobei die aufeinander liegenden freien Enden (21) des Bandes (20) mit der Wand (6) oder der Tür (3) verbunden sind, insbesondere mittels einer Schraubverbindung (22) verbunden sind, und das Schlaufenende (24) mittels einer Steckverbindung (28), insbesondere einer ohne Hilfswerkzeug herstellbaren und lösbaren Steckverbindung (26, 28) in der Tür (3) bzw. der Wand (6) gelagert ist.

7. Schrank nach einem der Ansprüche 1 bis 6, **dadurch gekennzeichnet, dass** die Tür (3) in einander abgewandten Endbereichen (10 ,11), entlang einer Begrenzungskante (9) der Tür (3), in der Wand (6) gelagert ist.

8. Schrank nach einem der Ansprüche 1 bis 7, **dadurch gekennzeichnet, dass** die Berstsicherung (20) im Bereich des mittleren Drittels zwischen den Lagerstellen der Tür (3), insbesondere auf halber Länge zwischen den Lagerstellen der Tür (3) angeordnet ist.

9. Schrank nach einem der Ansprüche 1 bis 7, **dadurch gekennzeichnet, dass** die Tür (3) benachbart der Berstsicherung (20) mit mindestens einem Formteil (16) versehen ist, das parallel zur Ebene der Tür (3) wirksam ist und in der geschlossenen Stellung der Tür (3) ein Formteil (18) der Wand (6) hintergreift.

10. Schrank nach einem der Ansprüche 1 bis 9, **dadurch gekennzeichnet, dass** die Tür (3) in ihrem der Schwenkachse (9) abgewandten Bereich (12) verriegelbar ist.

## Claims

1. Cable distribution cabinet (1) with at least one lockable door (3), which is mounted pivotably in the housing (2) of the cabinet (1), wherein the cabinet (1) is provided with a burst prevention means (20) in the region of the connection between the housing (2) and the door (3), **characterized in that** the cabinet (1) is provided with the burst prevention means (20) in the region of the connection between the door (3) and a wall (5) of the housing (2), said burst prevention means being in the form of a strap or rope which connects the wall (6) to the door (3), the burst prevention means (20), adjacent to the swivel pin (9) of the door (3), acting on said door and the wall (6) and being arranged between the bearing points of the door (3).

2. Cabinet according to Claim 1, **characterized in that** the burst prevention means (20) is elastic.

3. Cabinet according to Claim 1 or 2, **characterized in that** the burst prevention means (20) consists of plastics, rubber or rubber with a lining.

4. Cabinet according to one of Claims 1 to 3, **characterized in that** the length of the burst prevention means (20) is dimensioned such that, after the bursting operation and once the excess pressure in the cabinet has been relieved, the door (3) and wall (6) are moved away from one another in the region of the burst prevention means (20) by less than 50 mm, preferably less than 35 mm.

5. Cabinet according to one of Claims 1 to 4, **characterized in that** the strap (20) is in the form of a flexible tube.

6. Cabinet according to one of Claims 1 to 5, **characterized in that** the strap (20) is arranged in the manner of a loop, the free ends (21) of the strap (20) which rest one on top of the other being connected to the wall (6) or the door (3), in particular by means of a screw connection (22), and the loop end (24) being mounted in the door (3) or the wall (6) by means of a plug-type connection (28), in particular a plug-type connection (26, 28) which can be produced and released without the aid of an auxiliary tool.

7. Cabinet according to one of Claims 1 to 6, **characterized in that** the door (3) is mounted in the wall (6) in end regions (10, 11), facing away from one another, along a limiting edge (9) of the door (3).

8. Cabinet according to one of Claims 1 to 7, **characterized in that** the burst prevention means (20) is arranged in the region of the central third between the bearing points of the door (3), in particular halfway along the length between the bearing points of the door (3).

9. Cabinet according to one of Claims 1 to 7, **characterized in that** the door (3), adjacent to the burst prevention means (20), is provided with at least one moulding (16), which acts parallel to the plane of the door (3) and, in the closed position of the door (3), engages behind a moulding (18) of the wall (6).

10. Cabinet according to one of Claims 1 to 9, **characterized in that** the door (3) is lockable in its region (12) facing away from the swivel pin (9).

## Revendications

1. Armoire de distribution de câbles (1) comprenant au moins une porte verrouillable (3), qui est montée de manière pivotante dans le boîtier (2) de l'armoire (1), l'armoire (1) étant pourvue également dans la région de l'assemblage du boîtier (2) et de la porte (3) d'une protection contre l'éclatement (20), **caractérisée en ce que** l'armoire (1), dans la région de l'assemblage de la porte (3) et d'une paroi (5) du boîtier (2), est munie de la protection contre l'éclatement (20), laquelle est réalisée sous forme de bande ou de câble, qui relie la paroi (6) à la porte (3), la protection contre l'éclatement (20) venant en prise à côté de l'axe de pivotement (9) de la porte (3) avec cette dernière et avec la paroi (6), et étant disposée entre les points d'appui de la porte (3).

2. Armoire selon la revendication 1, **caractérisée en ce que** la protection contre l'éclatement (20) est réalisée sous forme élastique.

3. Armoire selon la revendication 1 ou 2, **caractérisée en ce que** la protection contre l'éclatement (20) se compose de plastique, de caoutchouc ou de caoutchouc avec insert.

4. Armoire selon l'une quelconque des revendications 1 à 3, **caractérisée en ce que** la longueur de la protection contre l'éclatement (20) est dimensionnée de telle sorte qu'après l'opération d'éclatement et la réduction de la surpression dans l'armoire, la porte (3) et la paroi (6) soient écartées l'une de l'autre dans la région de la protection contre l'éclatement (20) de moins de 50 mm, de préférence de moins de 35 mm.

5. Armoire selon l'une quelconque des revendications 1 à 4, **caractérisée en ce que** la bande (20) est réalisée sous forme de tuyau flexible.

6. Armoire selon l'une quelconque des revendications 1 à 5, **caractérisée en ce que** la bande (20) est disposée à la manière d'un tuyau flexible, les extrémités libres (21) superposées de la bande (20) étant raccordées à la paroi (6) ou à la porte (3), en particulier au moyen d'une connexion vissée (22), et l'extrémité du tuyau flexible (24) étant montée au moyen d'une connexion par enfichage (28), en particulier d'une connexion par enfichage (26, 28) pouvant être créée sans outil auxiliaire et pouvant être détachée, dans la porte (3) ou la paroi (6).

7. Armoire selon l'une quelconque des revendications 1 à 6, **caractérisée en ce que** la porte (3) est montée dans des régions d'extrémité opposées (10, 11) le long d'une arête de limitation (9) de la porte (3), dans la paroi (6).

8. Armoire selon l'une quelconque des revendications 1 à 7, **caractérisée en ce que** la protection contre l'éclatement (20) est disposée dans la région du tiers central entre les points d'appui de la porte (3), en particulier à mi-longueur entre les points d'appui de la porte (3).

9. Armoire selon l'une quelconque des revendications 1 à 7, **caractérisée en ce que** la porte (3) est munie, à côté de la protection contre l'éclatement (20), d'au moins une partie moulée (16), qui agit parallèlement au plan de la porte (3) et qui vient en prise par l'arrière dans la position fermée de la porte (3) avec une partie moulée (18) de la paroi (6).

10. Armoire selon l'une quelconque des revendications 1 à 9, **caractérisée en ce que** la porte (3) peut être verrouillée dans sa région (12) opposée à l'axe de pivotement (9).
